# EUROPÄISCHE PATENTSCHRIFT

(11) **EP 0 508 068 B1**
(45) Veröffentlichungstag und Bekanntmachung des Hinweises auf die Patenterteilung: **25.05.1994**
(21) Anmeldenummer: 92102800.7
(22) Anmeldetag: 20.02.1992
(51) Int. Cl.: F02B 29/04

(54) **Vorrichtung zur Regelung der Ladelufttemperatur einer Brennkraftmaschine in Abhängigkeit von der Tautemperatur der Ladeluft**
Supercharged temperature control device for an internal combustion engine in dependence on the temperature of the dew point of the charged air
Système de régulation de la température de la charge pour un moteur à combustion interne

(30) Priorität: 21.03.1991 DE 4109320
(43) Veröffentlichungstag der Anmeldung: 14.10.1992
(73) Patentinhaber: MAN B & W Diesel Aktiengesellschaft, 86135 Augsburg (DE)
(72) Erfinder: Wagner, Elmar, Dr., W-8900 Augsburg 1 (DE); Jelonek, Klaus, W-8904 Friedberg 2 (DE)

(56) Entgegenhaltungen:
- DE-A- 3 024 209
- FR-A- 2 474 591
- US-A- 4 716 734
- PATENT ABSTRACTS OF JAPAN vol. 9, no. 139 (M-387)(1862) 14. Juni 1985 & JP-A-60 019 921 (TOYOTA) 1. Februar 1985
- PATENT ABSTRACTS OF JAPAN vol. 10, no. 273 (M-518)(2329) 17. September 1986 & JP-A-61 096 128 (NIPPON DENSO) 14. Mai 1986
- PATENT ABSTRACTS OF JAPAN vol. 10, no. 231 (M-506)(2287) 12. August 1986 & JP-A-61 065 016 (MAZDA) 3. April 1986
- PATENT ABSTRACTS OF JAPAN vol. 10, no. 227 (M-505)(2283) 7. August 1986 & JP-A-61 061 917 (MAZDA) 29. März 1986

## Beschreibung

### Vorrichtung zur Regelung der Ladelufttemperatur einer Brennkraftmaschine in Abhängigkeit von der Tautemperatur der Ladeluft

Die Erfindung betrifft eine Vorrichtung zur Regelung der Ladelufttemperatur einer aufgeladenen Brennkraftmaschine.

Erhöhter Kondenswasserausfall im Ladeluftleitungssystem einer aufgeladenen Brennkraftmaschine führt durch mitgerissenes Kondenswasser u.a. zu Korrosion in den Zylindern. Ein vorbeugendes Anheben der Ladelufttemperatur würde schon allein wegen der wechselnden Lastzustände der Brennkraftmaschine wenigstens zeitweise zu unnötigen thermischen Belastungen der Brennkraftmaschine führen.

Eine aus der DE-PS 32 00 682 bekannte Vorrichtung weist eine den Ladeluftkühler und den Kühlflüssigkeitskühler einer aufgeladenen Brennkraftmaschine verbindende Kühlluftführung auf, in der zur Regelung des den Ladeluftkühler durchströmenden Kühlluftstromes ein verschließ- und freigebbarer Abluftquerschnitt vorgesehen ist. Die Steuerung der Freigabe bzw. des Verschlusses des Abluftquerschnittes erfolgt dabei Zeitgleich mit dem Einbringen einer höheren Kraftstoffmenge in den Brennraum der Brennkraftmaschine.

Bei einer aus der DE-AS 12 70 885 bekannten, zwei in einem Kühlluftstrom hintereinander angeordnete Wärmetauscher für zwei verschiedene Betriebsmittel aufweisenden Kühleinrichtung für eine Brennkraftmaschine erfolgt die Regelung der Ladelufttemperatur dadurch, daß die Drehzahl eines Kühlluftgebläses, das den den Ladeluftkühler durchströmenden Kühlluftstrom erzeugt, in Abhängigkeit von der Temperatur eines oder der beiden Betriebsmittel gesteuert wird.

Der Nachteil der bekannten Vorrichtungen liegt darin, daß die Regelung der Ladelufttemperatur auf der Grundlage von Kriterien erfolgt, die die einen Kondenswasserausfall bewirkenden Eigenschaften der Ladeluft nicht oder nur unzureichend berücksichtigen, und daß daher ständig die Gefahr einer thermischen Überlastung der Brennkraftmaschine gegeben ist.

In der DE-A-3 024 209 ist eine Kühlerregelung einer Brennkraftmaschine offenbart, die bei der Einstellung von Sollwerten den Außenzustand berücksichtigen kann, indem an ein elektrisches Steuergerät Meßfühler für Luftdruck, Lufttemperatur und Feuchtigkeit angeschlossen sind.

Der Erfindung liegt daher die Aufgabe zugrunde, eine Vorrichtung zur Regelung der Ladelufttemperatur so auszubilden, daß alle wesentlichen, einen Kondenswasserausfall bewirkenden Eigenschaften der Ladeluft berücksichtigt werden, ohne daß es jedoch zu einer unnötig hohen thermischen Belastung der Brennkraftmaschine durch überhöhte Ladelufttemperatur kommt.

Diese Aufgabe wird durch eine Vorrichtung mit den Merkmalen des Patentanspruchs 1 gelöst.

Vorteilhafte Weiterbildungen der Erfindung sind Gegenstand von Unteransprüchen.

Weitere Merkmale und Zweckmäßigkeiten ergeben sich aus der Beschreibung eines Ausführungsbeispiels anhand der Figuren. Von den Figuren zeigen
- Fig. 1: eine stark vereinfachte Darstellung der vom Ladeluftstrom durchströmten Baugruppen einer aufgeladenen Brennkraftmaschine; und
- Fig. 2: ein Prinzipschaltbild einer erfindungsgemäßen Vorrichtung zur Ladelufttemperaturregelung.

Die vorliegende Erfindung nutzt die Erkenntnis, daß die Menge des ausfallenden Wassers in hinreichend guter Näherung eine Funktion der physikalischen Größen Druck, Temperatur und Feuchtigkeitsgehalt der Luft ist.

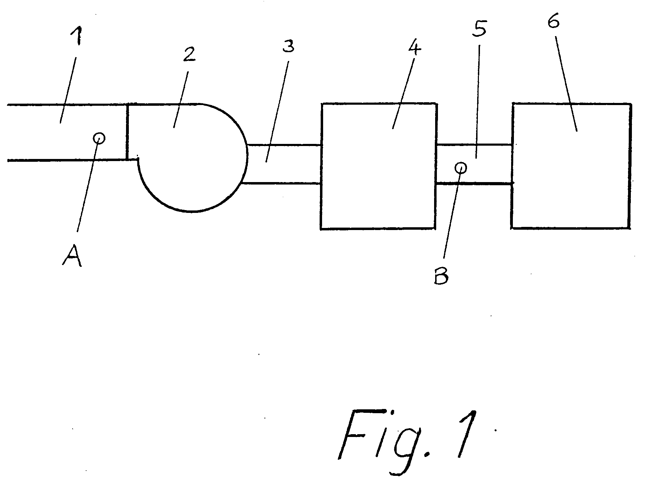

Figur 1 zeigt in stark vereinfachter Darstellung die vom Ladeluftstrom durchströmten Baugruppen einer aufgeladenen Brennkraftmaschine. Ein in eine Ansaugleitung 1 eingeströmter Luftstrom gelangt in einen Turbolader 2 und von dort über eine Verbindungsleitung 3 in einen Ladeluftkühler 4. Vom Ladeluftkühler 4 strömt der nunmehr gekühlte Ladeluftstrom in gesteuerter Weise durch eine Ladeluftleitung 5 hindurch zu einem zu befüllenden Zylinder 6 der aufgeladenen Brennkraftmaschine. Mit A und B sind Stellen in der Ansaugleitung 1 bzw. in der Ladeluftleitung 5 bezeichnet, an denen Meßstellen zum Erfassen bestimmter, weiter unten im einzelnen bezeichneter Eigenschaften der Ladeluft eingerichtet werden können.

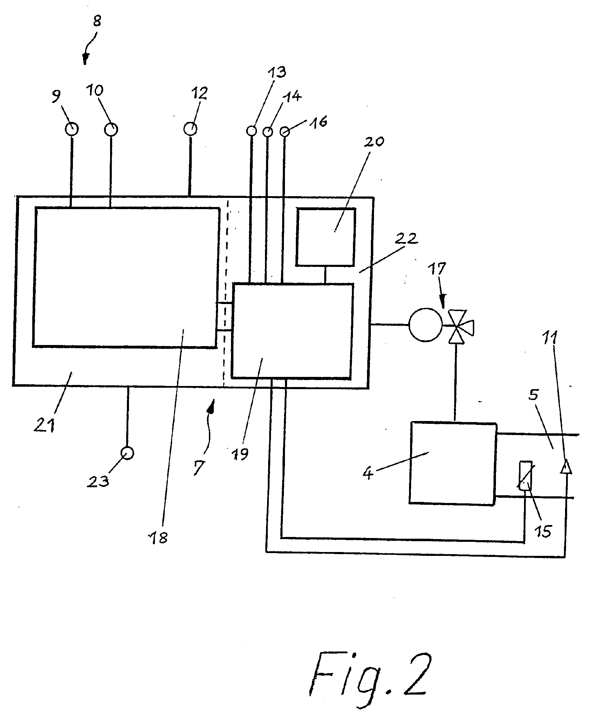

Figur 2 zeigt ein Prinzipschaltbild einer Vorrichtung zum Regeln der Temperatur eines Ladeluftstroms in einer erfindungsgemäßen Ausführungsform. Kern der Regelungsvorrichtung ist eine Regelungsschaltung 7, die eingangsseitig mit einer Fühlerkombination 8, die einen Feuchtefühler 9 und einen ersten Temperaturfühler 10 aufweist, sowie wahlweise mit einem Druckfühler 11 oder einem Lastgeber 13 und einem Drehzahlgeber 14 verbunden ist. Ein zweiter Temperaturfühler 15 zum Messen der Ladelufttemperatur, eine Versorgungsspannungsquelle 12, sowie ein Signaleingang 16 für eine externe Sollwertvorgabe für die Ladelufttemperatur sind ebenfalls mit der Regelungsschaltung 7 verbunden.

Die Fühlerkombination 8 dient, wie weiter unten näher ausgeführt wird, zum Messen der Luftfeuchte und der Temperatur der Ladeluft. Dabei erfolgt die Messung bei Anordnung der Fühlerkombination 8 an der Meßstelle A unter atmosphärischen Bedingungen und bei Anordnung der Fühlerkombination 8 an der Meßstelle B unter Ladedruckbedingungen.

Ausgangsseitig ist die Regelungsschaltung 7 mit einem motorisch verstellbaren Dreiwegeventil 17 verbunden, das den Kühlmittelfluß des Ladeluftkühlers 4 in bezug auf Menge oder Temperatur beeinflußt. Der Ladeluftkühler 4 dient in an sich bekannter Weise zum Kühlen des vom Turbolader 2 kommenden Ladeluftstroms.

Die Regelungsschaltung 7 weist eine Luftfeuchteauswerteschaltung 18 und eine Reglerschaltung 19 zum Steuern des Dreiwegeventils 17 auf. In der beispielsweise als Mikroprozessor ausgebildeten Luftfeuchteauswerteschaltung 18 wird aus den mit der Fühlerkombination 8 gemessenen Werten (Luftfeuchtigkeit und Temperatur) der angesaugten Luft bzw. der Ladeluft die jeweilige Tautemperatur bestimmt. Ein der ermittelten Tautemperatur entsprechendes Signal wird dann zusammen mit Signalen, die der momentanen Last und Drehzahl bzw. dem momentanen Ladedruck der Brennkraftmaschine sowie der Temperatur der Ladeluft in der Ladeluftleitung 5 entsprechen, der Reglerschaltung 19 zugeführt.

Die Reglerschaltung 19 bildet unter Zuhilfenahme von in einem Speicher 20 abgelegten Zuordnungstabellen aus diesen Eingangssignalen Steuersignale zum Steuern des Dreiwegeventils 17 derart, daß an der Meßstelle B eine Ladelufttemperatur erhalten wird, die deutlich über der ermittelten Tautemperatur liegt.

Wie bereits weiter oben angedeutet worden ist, gibt es für die Anordnung der Fühlerkombination 8 zwei Möglichkeiten der Anordnung, und zwar eine Anordnung an der Meßstelle A und eine Anordnung an der Meßstelle B. In Abhängigkeit von der gewählten Anordnung ist für die Zuordnung einer Ladelufttemperatur zu einer ermittelten Tautemperatur die eine oder die andere der im Speicher abgelegten wenigstens zwei Zuordnungstabellen zu verwenden, wie im folgenden näher ausgeführt wird. Da die Entscheidung für die eine oder die andere Meßstelle weder das Funktionsprinzip noch den Aufbau der vorliegenden Ladelufttemperaturregelungsvorrichtung beeinflußt, wird das der Erläuterung der vorliegenden Erfindung dienende Ausführungsbeispiel einheitlich belassen. Es werden also - auch der Klarheit der Erläuterung der Erfindung halber - nicht ein erstes Ausführungsbeispiel ("Meßstelle A") und ein zweites Auaführungsbeispiel ("Meßstelle B") beschrieben.

Wird die Fühlerkombination 8 an der Meßstelle A angeordnet, so werden die Luftfeuchte und die Temperatur der angesaugten Luft, also der Außenluft, unter atmosphärischen Bedingungen gemessen. Aus diesen Werten wird die atmosphärische Tautemperatur bestimmt. Am Ausgang des Ladeluftkühlers 4, und damit auch in der Ladeluftleitung 5, weist die Ladeluft jedoch einen wesentlich höheren Druck auf, so daß die atmosphärische Tautemperatur aufgrund des mit dem Druckfühler 11 gemessenen Wertes des Ladeluftdrucks in die unter Ladedruckbedingungen geltende "wahre" Tautemperatur umgerechnet werden muß.

Wird die Fühlerkombination 8 jedoch an der Meßstelle B angeordnet, so werden die Luftfeuchte und die Temperatur der Ladeluft unter momentanen Ladedruckbedingungen gemessen, und es ist so eine direkte Bestimmung der wahren Tautemperatur in der Ladeluftleitung 5 möglich.

Die Entscheidung für die Meßstelle B ist jedoch mit dem Nachteil behaftet, daß die Fühlerkombination 8 stärkeren Erschütterungen ausgesetzt ist und daß sie zudem bei Wartungsarbeiten an der Brennkraftmaschine leicht beschädigt werden kann. Dies trifft allerdings auch für den Ladedruckfühler 11 zu. Bei Inkaufnahme einer ladedruck- und motorlastunabhängigen Ladelufttemperatur, d.h. bei einheitlichem Bezug des tautemperaturabhängigen Ladelufttemperaturverlaufs auf den maximalen Ladedruck, können der Ladedruckfühler 11, der Lastgeber 13 und der Drehzahlgeber 14 entfallen. Dies kann bei Motoren, die mit konstanter Drehzahl betrieben werden, vorteilhaft sein, da hier zum Teil eine hohe Ladelufttemperatur bei Teillast zur Verbesserung der Verbrennung gewünscht wird.

Die Entscheidung für die eine oder die andere Anordnung der Fühlerkombination 8 wird im wesentlichen durch den Meßmittelaufwand bestimmt, der im speziellen Anwendungsfall erforderlich ist. Soll die Ladelufttemperatur nur für eine einzige Brennkraftmaschine geregelt werden, so wird die Entscheidung wohl dadurch bestimmt werden, welches Risiko einer Beschädigung der Fühlerkombination 8 der Nutzer der Brennkraftmaschine eingehen will. Soll dagegen die Ladelufttemperaturregelung für eine Mehrmotorenanlage erfolgen, so wird es sich anbieten, die Fühlerkombination 8 an der Meßstelle A oder, was wirkungsmäßig keinen Unterschied macht, außerhalb der Ansaugleitung 1 an einer in Bezug auf die Mehrmotorenanlage zentralen Stelle im Maschinenraum anzuordnen und so die Ladelufttemperatur aller Brennkraftmaschinen der Mehrmotorenanlage anhand der mit einem einzigen Feuchtemeßgerät 21 gemessenen Werte zu regeln.

Die Fühlerkombination 8 und die Luftfeuchteauswerteschaltung 18 bilden die wesentlichen Elemente eines Feuchtemeßgeräts 21, während die Reglerschaltung 19 einschließlich des Speichers 20 für die Zuordnungstabellen die wesentlichen Elemente eines Ladeluft-Temperaturreglers 22 darstellen. Bei Überschreiten einer bestimmten Tautemperatur wird der Regler 22 von interner Sollwertvorgabe auf externe Sollwertvorgabe umgeschaltet. Von diesem Zeitpunkt an erfolgt die Ladelufttemperatur-Sollwertvorgabe durch das Feuchtemeßgerät 21. Eine Anhebung der Ladelufttemperatur verhindert einen durch die Rückkühlung verursachten Ausfall des in der Ladeluft gebundenen Wassers. Dabei wird die Ladelufttemperatur gleichzeitig durch den zweiten Temperaturfühler 15 überwacht. Die Erfassung der Kenngrößen Last und Drehzahl der Brennkraftmaschine ermöglicht, außer der lastabhängigen Korrektur der taupunktabhängig geregelten Ladelufttemperatur auch die automatische Temperaturregelung in einem bestimmten Betriebsbereich der Brennkraftmaschine abzuschalten. Ein Signalausgang 23 bietet die Möglichkeit, ein von der Luftfeuchteauswerteschaltung 18 bei Ausfall der Versorgungsspannung oder bei einer Funktionsstörung der Fühlerkombination 8 erzeugtes Signal abzunehmen und einer (nicht dargestellten) Meldeeinrichtung in einer (ebenfalls nicht dargestellten) Überwachungseinrichtung am Leitstand der Brennkraftmaschine zuzuleiten.

## Patentansprüche

1. Vorrichtung zur Regelung der Ladelufttemperatur einer aufgeladenen Brennkraftmaschine mit ersten Meßmitteln (9, 10) zum Messen der Feuchte und der Temperatur eines von einem Turbolader (2) angesaugten Ladeluftstroms und zweiten Meßmitteln (11, 15) zum Messen des Drucks und der Temperatur des Ladeluftstroms nach Verlassen eines von diesem Ladeluftstrom durchströmten Ladeluftkühlers (4), einer Luftfeuchteauswerteschaltung (18) zum Ermitteln der Tautemperatur der Ladeluft aus von den ersten Meßmitteln (9, 10) zugeführten Signalen und einer Reglerschaltung (19) zum Ermitteln eines Ladelufttemperaturvorgabewerts aus von der Luftfeuchteauswerteschaltung (18), den zweiten Meßmitteln (11, 15) und einem Speicher (20), in dem Zuordnungstabellen für die Zuordnung von Ladelufttemperaturen zu Tautemperaturen gespeichert sind, zugeführten Signalen und zum Bilden eines Ausgangssignals, das zum Steuern eines die Kühlwirkung des Ladeluftkühlers (4) beeinflussenden Elements (17) dient, so daß die ermittelte Tautemperatur nicht unterschritten wird.

2. Vorrichtung nach Anspruch 1, dadurch gekennzeichnet, daß als erste Meßmittel eine Fühlerkombination (8) mit einem Feuchtefühler (9) und einem ersten Temperaturfühler (10) vorgesehen ist.

3. Vorrichtung nach Anspruch 1 oder 2, dadurch gekennzeichnet, daß als zweite Meßmittel ein Ladedruckfühler (11) und ein zweiter Temperaturfühler (15) vorgesehen sind.

4. Vorrichtung nach einem der Ansprüche 1 bis 3, dadurch gekennzeichnet, daß die ersten Meßmittel (9, 10), auf den Weg des Ladeluftstroms bezogen, vor dem Turbolader (2) angeordnet sind.

5. Vorrichtung nach Anspruch 4, dadurch gekennzeichnet, daß die ersten Meßmittel (9, 10) bei einer Mehrmotorenanlage an einer in Bezug auf diese Mehrmotorenanlage zentralen Stelle außerhalb von den einzelnen Turboladern (2) zugeordneten Ansaugleitungen (1) angeordnet sind.

6. Vorrichtung nach einem der Ansprüche 1 bis 3, dadurch gekennzeichnet, daß die ersten Meßmittel (9), auf den Weg des Ladeluftstroms bezogen, nach dem Ladeluftkühler (4) angeordnet sind.

7. Vorrichtung nach einem der Ansprüche 1 bis 6, dadurch gekennzeichnet, daß als weitere Meßmittel (13, 14) ein Lastgeber (13) und ein Drehzahlgeber (14) vorgesehen sind.

## Claims

1. Device for regulating the intake air temperature of a supercharged internal combustion engine having first measuring means (9, 10) for measuring the humidity and temperature of an intake air stream drawn in by a turbocharger (2), and second measuring means (11, 15) for measuring the pressure and temperature of the intake air stream after it leaves an intake air cooler (4) through which this intake air stream flows, an air humidity evaluation circuit (18) for determining the condensation temperature of the intake air from signals supplied by the first measuring means (9, 10) and a regulator circuit (19) for determining a nominal value of the intake air temperature from signals supplied from the air humidity evaluation circuit (18), the second measuring means (11, 15) and a store (20) in which assignment tables for the assignment of intake air temperatures to condensation temperatures are stored, and for forming an output signal which is used to control an element (17) influencing the cooling effect of the intake air cooler (4), so that the determined condensation temperature is not fallen short of.

2. Device according to claim 1, characterised in that a sensor combination (8) having a humidity sensor (9) and a first temperature sensor (10) is provided as the first measuring means.

3. Device according to claim 1 or 2, characterised in that an intake pressure sensor (11) and a second temperature sensor (15) are provided as the second measuring means.

4. Device according to one of claims 1 to 3, characterised in that with respect to the path of the intake air stream the first measuring means (9, 10) are arranged in front of the turbocharger (2).

5. Device according to claim 4, characterised in that in a multi-motor installation the first measuring means (9, 10) are arranged outside intake conduits (1) associated with the individual turbochargers (2) at a point which is central with respect to this multi-motor installation.

6. Device according to one of claims 1 to 3, characterised in that with respect to the path of the intake air stream the first measuring means (9) are arranged after the intake air cooler (4).

7. Device according to one of claims 1 to 6, characterised in that a load sensor (13) and a tachometer (14) are provided as further measuring means (13, 14).

## Revendications

1. Dispositif pour régler la température de l'air de suralimentation d'un moteur à combustion interne à suralimentation, comportant des premiers moyens de mesure (9, 10) servant à mesurer l'humidité et la température d'un courant d'air d'alimentation aspiré par un turbocompresseur (2), et des seconds moyens de mesure (11, 15) servant à mesurer la pression et la température du courant d'air de suralimentation lorsqu'il quitte un refroidisseur d'air de suralimentation (4) traversé par ce courant d'air de suralimentation, un circuit (18) d'évaluation de l'humidité de l'air servant à déterminer le point de rosée de l'air de suralimentation à partir de signaux envoyés par les premiers moyens de mesure (9, 10) et un circuit de réglage (19) servant à déterminer une valeur de prédétermination de la température de l'air de suralimentation à partir de signaux transmis par le circuit (18) d'évaluation de l'humidité de l'air, des seconds moyens de mesure (11, 15) et une mémoire (20), dans laquelle sont mémorisés des tableaux donnant l'association entre des températures de l'air de suralimentation et des points de rosée, et pour la formation d'un signal de sortie, qui sert à commander un élément (17), qui influe sur l'action de refroidissement du refroidisseur d'air de suralimentation (4) de manière qu'on ne tombe pas au-dessous du point de rosée déterminé.

2. Dispositif selon la revendication 1, caractérisé en ce qu'il est prévu comme premiers moyens de mesure, une combinaison de capteurs (8) comprenant un capteur d'humidité (9) et un premier capteur de température (10).

3. Dispositif selon la revendication 1 ou 2, caractérisé en ce qu'il est prévu comme second moyen de mesure un capteur (11) de la pression de suralimentation et un second capteur de température (15).

4. Dispositif selon l'une des revendications 1 à 3, caractérisé en ce que les premiers moyens de mesure (9, 10) sont disposés en amont du turbocompresseur (2), sur le trajet du courant d'air de suralimentation.

5. Dispositif selon la revendication 4, caractérisé en ce que les premiers moyens de mesure (9, 10) sont disposés, dans le cas d'une installation à plusieurs moteurs, en un emplacement central par rapport à cette installation à plusieurs moteurs, à l'extérieur de conduits d'aspiration (1) associés aux différents turbocompresseurs (2).

6. Dispositif selon l'une des revendications 1 à 3, caractérisé en ce que les premiers moyens de mesure (9) sont disposés en aval du refroidisseur d'air de suralimentation (4) sur le trajet du courant d'air de suralimentation.

7. Dispositif selon l'une des revendications 1 à 6, caractérisé en ce qu'il est prévu, comme autres moyens de mesure (13, 14), un générateur de charge (13) et un générateur de vitesse de rotation (14).
